# EUROPÄISCHE PATENTSCHRIFT

(11) **EP 0 615 870 B1**
(45) Veröffentlichungstag und Bekanntmachung des Hinweises auf die Patenterteilung: **25.09.1996**
(21) Anmeldenummer: 94103156.9
(22) Anmeldetag: 03.03.1994
(51) Int. Cl.: B60G 17/015

(54) **Arbeitsfahrzeug mit einer hydropneumatischen, niveaugeregelten Achsfederung**
Utility vehicle with a hydropneumatic level controlled axle suspension
Véhicule utilitaire avec suspension d'essieux contrôle d'assiette hydropneumatique

(30) Priorität: 17.03.1993 DE 4308460
(43) Veröffentlichungstag der Anmeldung: 21.09.1994
(73) Patentinhaber: Xaver Fendt GmbH & Co., D-87616 Marktoberdorf (DE)
(72) Erfinder: Ambros, Karl, D-87640 Altdorf (DE); Leutner, Siegfried, D-87600 Kaufbeuren (DE); Heinle, Hans, D-87640 Biessenhofen (DE); Rathke, Gerd, D-87616 Marktoberdorf (DE); Schott, Herbert, D-87616 Marktoberdorf (DE)

(56) Entgegenhaltungen:
- FR-A- 1 280 650
- FR-A- 2 007 757

## Beschreibung

Die Erfindung betrifft ein Arbeitsfahrzeug mit einer hydropneumatischen, niveaugeregelten Achsfederung, die mindestens einen doppeltwirkenden Stellzylinder umfasst, dessen oberhalb eines Kolbens befindlicher Zylinderraum mit einem ersten Druckspeicher zusammenwirkt, der über einen Niveauregelventilblock an eine fahrzeugeigene Hydraulikpumpe angeschlossen ist, und dessen unterhalb des Kolbens befindlicher Zylinderringraum mit einem zweiten Druckspeicher zusammenwirkt, der unter Umgehung des Niveauregelventilblocks von der Hydraulikpumpe mit Druckflüssigkeit aufladbar ist.

Eine in der angegebenen Weise aufgebaute Achsfederung für ein Arbeitsfahrzeug ist in der DE 41 20 758 A1 beschrieben. Die zum Betrieb der Federung benötigte Druckflüssigkeit wird hier von einer in ihrer Betriebsweise nicht näher erläuterten Pumpe geliefert. Um die Härte der Federung an unterschiedliche Achslasten anzupassen, wird in den Zylinderringräumen der Stellzylinder ein Gegendruck aufgebaut. Für dessen Steuerung ist ein Regelventil vorgesehen, das jedoch einen nicht unbedeutenden zusätzlichen Bau- und Kostenaufwand darstellt.

Aufgabe der Erfindung ist es, eine hydropneumatische Federung mit Niveauregelung für Arbeitsfahrzeuge zu schaffen, die bei einfachem Aufbau die Anforderungen insbesondere bei landwirtschaftlichen Einsätzen erfüllt.

Diese Aufgabe wird dadurch gelöst, daß der Zweite Druckspeicher bei Bedarf über den Niveauregelventilblock an den ersten Druckspeicher bzw. den Zylinderraum anschließbar ist und in der Druckleitung von der Hydraulikpumpe zum Niveauregelventilblock zwischen den Abzweigungen zu den weiteren Verbrauchern und der Abzweigung zum zweiten Druckspeicher ein in Richtung des Niveauregelventilblocks öffnendes Rückschlagventil liegt.

Mit der vorgeschlagenen Anordnung bedarf es für die Anbindung der hydropneumatischen Federung an die Hydraulikanlage des Fahrzeuges im wesentlichen lediglich des sowieso vorhandenen Niveauregelventilblocks, wodurch der Herstellungsaufwand erheblich vermindert ist. Die zum Betrieb der Federung und für die Erzeugung des Gegendruckes benötigte Druckflüssigkeit wird in den Arbeitsphasen, in denen ein weiterer Verbraucher eingeschaltet ist, vom zweiten Druckspeicher aufgenommen und in Arbeitsphasen, in denen kein weiterer Verbraucher eingeschaltet ist, bei Bedarf über den Niveauregelventilblock dem ersten Druckspeicher zugeführt. Auf diese-Weise kann auch in solchen Arbeitsphasen, in denen die Hydraulikpumpe keine Druckflüssigkeit fördert, eine Niveauregelung zum Ausgleich eines abgesunkenen Fahrzeugaufbaus erfolgreich durchgeführt werden.

Eine Ausgestaltung der Erfindung in der Weise, daß der Niveauregelventilblock zwei unabhängig voneinander betätigbare 2/2-Ventile aufweist, erlaubt die Ausführung einer zusätzlichen Funktion.

Die erfindungsgemäße hydropneumatische Federung wird im folgenden an Hand einer Schemazeichnung näher erläutert.

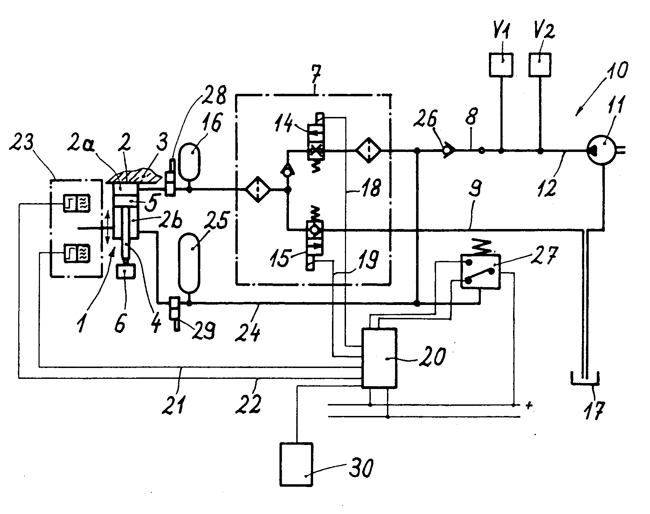

In der Zeichnung ist ein Stellzylinder der hydropneumatischen Federung eines Fahrzeuges allgemein mit 1 bezeichnet. Sein Gehäuse 2 stützt sich am abzufedernden Fahrzeugaufbau 3 ab, während die Kolbenstange 4 des im Gehäuse 2 verschiebbaren Kolbens 5 an der mit 6 angedeuteten Fahrzeugachse angreift. Der oberhalb des Kolbens 5 befindliche Zylinderraum 2a ist über einen Niveauregelventilblock 7 und über die Leitungen 8 und 9 an die Hydraulikanlage 10 des Fahrzeuges angebunden.

Die Hydraulikanlage 10 umfasst eine Pumpe 11, an deren Druckleitung 12 nicht nur die Leitung 8 zum Niveauregelventilblock 7, sondern darüber hinaus Leitungen zu weiteren Druckflüssigkeitsverbrauchern V1, V2, wie z.B. Hubzylinder für Kraftheber und/oder Frontlader, angeschlossen sind.

Der Niveauregelventilblock 7 enthält zwei elektrisch ansteuerbare 2/2-Ventile 14, 15, von denen das Ventil 14 die Druckflüssigkeitszufuhr zum Zylinderraum 2a und zu einem damit in Verbindung stehenden ersten Druckspeicher 16 beeinflusst und das Ventil 15 für die Abfuhr dieser Druckflüssigkeit über die Leitung 9 zum Druckflüssigkeitsbehälter 17 zuständig ist. Die Steuerung der Ventile 14, 15 erfolgt auf elektrischem Wege über entspr. Steuerleitungen 18, 19 mittels eines Steuergerätes 20, das außerdem über elektrische Leitungen 21, 22 mit einem die relative Einfederung des Fahrzeugaufbaus 3 gegenüber der Fahrzeugachse 6 ermittelnden Niveauschalter 23 verbunden ist.

Vor dem Niveauregelventilblock 7 zweigt von der Druckleitung 8 eine Leitung 24 ab, die zum Zylinderringraum 2b führt und mit einem zweiten Druckspeicher 25 in Verbindung steht. Beide Behälter werden über ein in der Druckleitung 8 zwischen der Abzweigstelle der Druckleitung 24 und den Leitungen 13 zu den von der Pumpe 11 noch belieferten hydraulischen Verbrauchern V1, V2 angeordnetes Rückschlagventil 26 mit Druckflüssigkeit beaufschlagt. Ein Druckschalter 27 überwacht den Druck in der Druckleitung 24 auf Über- oder Unterschreiten vorgegebener Grenzwerte. So kann zum einen nach Erreichen des max. zul. Gegendruckes die Pumpe 11 in Kurzschluß geschaltet oder bei Verwendung einer Load-Sensing-Pumpe als Druckflüssigkeitsquelle deren Liefermenge auf Null gestellt werden. Zum anderen kann auf diese Weise durch außerplanmäßiges Einschalten der Pumpe 11 eine unzulässige Entladung des Druckspeichers 25 verhindert werden.

In den Druckleitungen zwischen den Druckspeichern 16, 25 und dem zugehörigen Zylinderraum 2a bzw. Zylinderringraum 2b befindet sich außerdem je ein Absperrventil 28 bzw. 29. In ihre Sperrstellung geschaltet setzen diese Sperrventile die Federung in der jeweils eingestellten Höhe des Fahrzeugaufbaus vollständig außer Funktion.

Neben dieser Sperrbarkeit der Federung in beliebigen Lagen des Fahrzeugaufbaus 3 hat der Fahrzeugführer an einem Bedienteil 30 die Wahlmöglichkeit, die Sperrventile 14, 15 wahlweise manuell oder automatisch in Abhängigkeit von best. Kriterien zu steuern. So kann als Kriterium z.B. bei Frontladearbeiten die jeweilige Fahrgeschwindigkeit herangezogen werden, wobei die Funktion der Federung nur unterhalb eines vorgegebenen Geschwindigkeits-Grenzwertes ausgeschaltet ist, oder beim Pflügen die Stellung des Pfluges, wobei die Funktion der Federung ausschließlich bei abgesenktem Pflug ausgeschaltet ist.

### Funktionsweise der Niveauregelung:

Es wird davon ausgegangen, daß sich der Fahrzeugaufbau zunächst entsprechend der jeweiligen Achslast in der gewünschten Höhe befindet, und das Steuergerät 20 die Ventile 14, 15 geschlossen hält. Der Druckspeicher 25 ist vom vorausgegangenen Einsatz teilweise entladen. Da kein hydraulischer Verbraucher V1, V2 betätigt ist, arbeitet die Pumpe 11 im Kurzschluß. In dieser Situation wird der Gegendruck im Zylinderringraum 2b durch das geschlossene Rückschlagventil 26 aufrechterhalten.

Erfährt die Achse 6 beispielsweise durch Aufnahme eines Arbeitsgerätes mit Hilfe einer fahrzeugeigenen Hubvorrichtung V1 eine Laständerung, so wird zunächst durch die Betätigung der Hubvorrichtung V1 durch die Pumpe 11 Druck im Hydraulikkreis aufgebaut. Unter der aufgenommenen Last sinkt der Fahrzeugaufbau 3 ab und nähert sich der Achse 6. Die Größe der Annäherung wird vom Niveauschalter 23 an das Steuergerät 20 gemeldet, welches das Ventil 14 öffnet und dadurch der von der Pumpe 11 gelieferten Druckflüssigkeit den Zugang zum Zylinderraum 2a freigibt. Das Ventil 14 bleibt solange geöffnet, bis der Niveauschalter 23 dem Steuergerät 20 meldet, daß der Fahrzeugaufbau 3 sein ursprüngliches Niveau wieder erreicht hat.

Wird die Fahrzeugachse 6 durch den Abbau eines Arbeitsgerätes entlastet, so veranlasst das Steuergerät 20 aufgrund der Meldung des Niveauschalters 23 die Öffnung des Ventils 15, bis genügend Druckflüssigkeit aus dem Zylinderraum 2a in den Druckflüsigkeitsbehälter 17 zurückgeströmt ist, um den Fahrzeugaufbau 3 auf das gewünschte Niveau abzusenken.

Während die beschriebene Niveauregelung stattfindet, strömt, sofern der Druckspeicher 25 nicht voll aufgeladen ist, Druckflüssigkeit von der Druckleitung 8 über die Leitung 24 und lädt den Druckspeicher 25 auf max. Gegendruck auf. Ist in dieser. Situation keine Niveauregelung erwünscht, sondern eine Sperrung der hydropneumatischen Federung in abgesenkter Lage des Fahrzeugaufbaus 3, so kann diese Funktion ohne ein zusätzliches Ventil durch Schließen des Ventils 14 und Öffnen des Ventils 15 realisiert werden.

Wird während des anschließenden Betriebs des Arbeitsfahrzeuges kein hydraulischer Verbraucher V1, V2 betätigt, steht seitens der Pumpe 11 keine Druckflüssigkeit für evtl. notwendige Niveaukorrekturen des Fahrzeugaufbaus 3 zur Verfügung. Solche Korrekturen können sich jedoch z.B. nach dem manuellen Anbau von Belastungsgewichten oder beim Befahren von Steigungen oder Gefällen mit nach hinten bzw. vorn auskragenden Massen als notwendig erweisen. Damit auch in derartigen Situationen auf Niveaukorrekturen nicht verzichtet werden muß, kann durch Öffnen des Ventils 14 bei geschlossenem Ventil 15 der Zylinderraum 2a mit Druckflüssigkeit aus dem Druckspeicher 25 beliefert werden. Der Gegendruck im Zylinderringraum 2b nimmt dabei zwar bei einem jeden Regelzyklus zwangsläufig ab. Bei entsprechender Auslegung des Fassungsvermögens des Druckspeichers 25 gelingt es jedoch, die Größe des Druckverlustes sehr gering zu halten, so daß der Gegendruck im Zylinderringraum 2b bis zur nächsten Betätigung eines Verbrauchers V1, V2, bei der die Pumpe 11 den Druckspeicher 25 wieder auffüllt, eine ausreichende Höhe behält. Sollte die Entladung des Druckspeichers 25 dennoch ein zul. Maß überschreiten, wird über den Druckschalter 27 und das Steuergerät 20 die Pumpe 11 vorübergehend eingeschaltet.

## Patentansprüche

1. Arbeitsfahrzeug mit einer hydropneumatischen, niveaugeregelten Achsfederung, die mindestens einen doppeltwirkenden Stellzylinder (1) umfasst, dessen oberhalb eines Kolbens (5) befindlicher Zylinderraum (2a) mit einem ersten Druckspeicher (16) zusammenwirkt, der über einen Niveauregelventilblock (7) an eine fahrzeugeigene Hydraulikpumpe (11) angeschlossen ist, und dessen unterhalb des Kolbens (5) befindlicher Zylinderraum (2b) mit einem zweiten Druckspeicher (25) zusammenwirkt, der unter Umgehung des Niveauregelventilblocks (7) von der Hydraulikpumpe (11) mit Druckflüssigkeit aufladbar ist,
**dadurch gekennzeichnet**,
daß der zweite Druckspeicher (25) bei Bedarf über den Niveauregelventilblock (7) an den ersten Druckspeicher (16) bzw. den Zylinderraum (2a) anschließbar ist und in der Druckleitung (8) von der Hydraulikpumpe (11) zum Niveauregelventilblock (7) zwischen den Abzweigungen zu den weiteren Verbrauchern (V1, V2) und der Abzweigung zum zweiten Druckspeicher (25) ein in Richtung des Niveauregelventilblocks (7) öffnendes Rückschlagventil (26) liegt.

2. Arbeitsfahrzeug nach Anspruch 1,
**dadurch gekennzeichnet**,
daß der Niveauregelventilblock (7) zwei unabhängig voneinander betätigbare 2/2-Ventile (14, 15) aufweist.

3. Arbeitsfahrzeug nach den Ansprüchen 1 und 2,
**dadurch gekennzeichnet**,
daß die Zylinderräume (2a,2b) durch Sperrventile (28,29) von den Druckspeichern (16,25) absperrbar sind.

4. Arbeitsfahrzeug nach den Ansprüchen 1 bis 3,
**dadurch gekennzeichnet**,
daß die Achsfederung wahlweise manuell oder automatisch in Abhängigkeit vorgegebener Betriebskriterien, wie z.B. der Fahrgeschwindigkeit, sperrbar ist.

5. Arbeitsfahrzeug nach den Ansprüchen 1 bis 4,
**dadurch gekennzeichnet**,
daß der Druckspeicher (25) ein größeres Fassungsvermögen aufweist als der Druckspeicher (16).

6. Arbeitsfahrzeug nach den Ansprüchen 1 bis 5,
**gekennzeichnet durch**
einen den Druck in der Druckleitung (24) auf einen oberen und einen unteren Grenzwert überwachenden Druckschalter (27), wobei die Unterschreitung des unteren Grenzwertes vorübergehend eine Zuschaltung der Pumpe (11) bewirkt.

## Claims

1. Operating vehicle having a hydropneumatic, level-controlled spring suspension system, which comprises at least one double-action control cylinder (1), of which the cylinder chamber (2a) situated above a piston (5) cooperates with a first accumulator (16), which is connected by a level-controlling valve block (7) to a hydraulic pump (11) of the vehicle, and the cylinder chamber (2b) situated below the piston (5) cooperates with a second accumulator (25), which may be charged with pressure fluid by the hydraulic pump (11) bypassing the level-controlling valve block (7),
characterized in
that the second accumulator (25), when required, is connectable by the level-controlling valve block (7) to the first accumulator (16) and the cylinder chamber (2a) and in the pressure line (8) from the hydraulic pump (11) to the level-controlling valve block (7) a non-return valve (26) opening in the direction of the level-controlling valve block (7) lies between the branches leading to the further loads (V1, V2) and the branch leading to the second accumulator (25).

2. Operating vehicle according to claim 1,
characterized in
that the level-controlling valve block (7) comprises two 2/2-way valves (14, 15) which are operable independently of one another.

3. Operating vehicle according to claims 1 and 2,
characterized in
that the cylinder chambers (2a, 2b) may be shut off from the accumulators (16, 25) by means of shut-off valves (28, 29).

4. Operating vehicle according to claims 1 to 3,
characterized in
that the spring suspension system may be shut off either manually or automatically in dependence upon preset operating criteria such as, for example, the driving speed.

5. Operating vehicle according to claims 1 to 4,
characterized in
that the accumulator (25) has a greater capacity than the accumulator (16).

6. Operating vehicle according to claims 1 to 5,
characterized by
a pressure switch (27) which monitors the pressure in the pressure line (24) for an upper and a lower limit value, a drop below the lower limit value temporarily effecting a connection to system of the pump (11).

## Revendications

1. Véhicule de service avec une suspension à ressort de l'essieu hydropneumatique, à niveau contrôlé, comprenant au moins un cylindre de réglage (1) à double action, dont la chambre (2a) située au dessus du piston (5) coopère avec un premier accumulateur hydraulique (16) raccordé à une pompe hydraulique (11) du véhicule par l'intermédiaire d'un ensemble de soupapes de régulation de niveau (7), et, dont la chambre (2b) située en dessous du piston (5) coopère avec un second accumulateur hydraulique (25) pouvant être chargé par la pompe hydraulique (11) en fluide sous pression en évitant l'ensemble de soupapes de régulation de niveau (7), *caractérisé en ce que* en cas de besoin le second accumulateur hydraulique (25) peut être raccordé, par l'intermédiaire de l'ensemble de soupapes de régulation de niveau (7), au premier accumulateur hydraulique (16), respectivement à la chambre (2a) du cylindre, et *que* dans la conduite sous pression (8) reliant la pompe hydraulique (11) à l'ensemble de soupapes de régulation de niveau (7), un clapet anti-retour (26) s'ouvrant en direction de l'ensemble de soupapes de régulation de niveau (7) est disposé entre les branchements vers les autres dispositifs utilisateurs (V1), (V2) et le branchement vers le second accumulateur hydraulique (25).

2. Véhicule de service selon la revendication 1 *caractérisé en ce que* l'ensemble de soupapes de régulation de niveau (7) comporte deux soupapes à deux voies (14), (15) pouvant être actionnées indépendamment l'une de l'autre.

3. Véhicule de service selon les revendications 1 et 2 *caractérisé en ce que* les chambres (2a), (2b) du cylindre peuvent être coupées des accumulateurs hydrauliques (16), (25) par des soupapes d'arrêt (28), (29).

4. Véhicule de service selon les revendications 1 à 3 *caractérisé en ce que* la suspension à ressort de l'essieu peut être arrêtée au choix manuellement ou automatiquement en fonction de critères de fonctionnement prédéterminés, tels que par exemple la vitesse de roulement.

5. Véhicule de service selon les revendications 1 à 4 *caractérisé en ce que* l'accumulateur hydraulique (25) dispose d'une plus grande capacité que l'accu-mulateur hydraulique (16).

6. Véhicule de service selon les revendications 1 à 5 *caractérisé par* un interrupteur manométrique qui surveille une valeur limite supérieure et une valeur limite inférieure de la pression dans la conduite sous pression (24), le passage en dessous de la valeur limite inférieure provoquant une connexion temporaire avec la pompe hydraulique (11).
